Europäisches Patentamt

European Patent Office

Office européen des brevets

(19)

(11) **EP 1 096 656 A1**

(12) # DEMANDE DE BREVET EUROPEEN

(43) Date de publication:
**02.05.2001 Bulletin 2001/18**

(51) Int. Cl.⁷: **H02P 3/02**, H02P 19/02, B60H 1/00

(21) Numéro de dépôt: **00122589.5**

(22) Date de dépôt: **17.10.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.10.1999 FR 9913452**

(71) Demandeur: **VALEO CLIMATISATION**
**78321 La Verrière (FR)**

(72) Inventeurs:
• **Colette, Olivier**
  **78320 Le Mesnil St Denis (FR)**
• **Guigou, Pascal**
  **92260 Fontenay aux Roses (FR)**

(54) **Moteur, et sa commande, pour le déplacement d'un volet d'une installation de ventilation, chauffage et/ou climatisation d'un véhicule automobile**

(57) Un moteur (M) pour le déplacement d'un volet (4) de distribution d'un flux d'air (F) dans un conduit (3) d'une installation de ventilation, chauffage et/ou climatisation est alimenté en tension (U). Selon l'invention, un module (MOD) de régulation en puissance est monté en série avec le moteur, et comporte au moins une résistance à coefficient de température positif, de sorte que, lorsque le volet atteint une position d'ouverture (P1) ou de fermeture (P2), le moteur se bloque. Il en résulte une augmentation de l'intensité (i) dans le circuit, entraînant une augmentation de la valeur de la résistance, laquelle se traduit finalement par une diminution de l'intensité et de la tension aux bornes du moteur.

FIG.1

EP 1 096 656 A1

**Description**

L'invention concerne un dispositif de distribution d'un flux d'air dans un conduit d'une installation de ventilation, chauffage et/ou climatisation d'un habitacle de véhicule automobile.

Un dispositif de ce type comprend généralement un moteur électrique capable de déplacer un volet de distribution entre une position de fermeture et une position d'ouverture d'un conduit d'une installation du type précité.

Le dispositif comprend en outre une source en tension pour alimenter électriquement le moteur. Habituellement, un module de commande, connecté au moteur, régule la puissance électrique délivrée pour l'alimentation du moteur.

Un tel module de commande comprend cependant un grand nombre de composants, dont plusieurs composants actifs, qui compliquent la structure du module. Par ailleurs, lorsque le volet est immobile, notamment dans l'une de ses positions d'ouverture ou de fermeture, le module de commande coupe l'alimentation du moteur. Il est généralement prévu un ensemble de composants électroniques permettant une temporisation de la durée d'alimentation lorsque le module de commande coupe l'alimentation du moteur, le volet ayant atteint l'une de ses positions d'ouverture ou de fermeture. Une telle électronique de temporisation alourdit davantage la structure des modules de commande connus.

La présente invention vient améliorer la situation.

Elle propose à cet effet un dispositif du type défini en introduction, mais dans lequel l'alimentation électrique du moteur est régulée en puissance par un module comprenant une première borne connectée à une première borne du moteur, tandis qu'une tension d'alimentation est appliquée entre une seconde borne du module de régulation et la seconde borne du moteur, un tel module de régulation étant agencé pour ajuster, à tension d'alimentation sensiblement constante, l'intensité du courant traversant le moteur à une valeur inférieure à une valeur seuil lorsque le volet est immobile.

Ainsi, le moteur du dispositif selon l'invention peut être alimenté en tension de façon permanente, ce qui permet de se passer d'une électronique de temporisation du type décrit ci-avant.

Avantageusement, le module de régulation est formé d'au moins un dipôle passif, préférentiellement une résistance à coefficient de température positif.

Selon une autre caractéristique optionnelle avantageuse de l'invention, la source d'alimentation est agencée pour délivrer une tension polarisée, et le module de régulation comporte une bascule propre à fournir au moteur un courant qui est fonction de la polarité de la tension d'alimentation.

Ainsi, dans une forme de réalisation préférée de l'invention, le module de régulation comporte deux résistances à coefficient de température positif, montées en parallèle et connectées respectivement à des première et seconde diodes, inversées et montées chacune en série avec une résistance.

Avantageusement, la polarité de la tension d'alimentation délivrée est :

- d'un premier signe lorsque le volet est dans sa position de fermeture et/ou en déplacement de sa position d'ouverture à sa position de fermeture, et
- d'un second signe, opposé au premier signe, lorsque le volet est dans sa position d'ouverture et/ou en déplacement de sa position de fermeture à sa position d'ouverture.

Dans une forme de réalisation avantageuse de l'invention, le module de régulation et le moteur, lorsque le véhicule est en service, sont alimentés en tension sensiblement constante, au moins en valeur absolue, et le module de régulation est agencé pour ajuster l'intensité du courant traversant le moteur à une valeur inférieure à la valeur seuil précitée, lorsque le volet est dans l'une de ses positions d'ouverture et de fermeture.

D'autres caractéristiques et avantages de l'invention apparaîtront à l'examen de la description détaillée ci-après, et des dessins annexés sur lesquels :

- la figure 1 représente une vue d'ensemble d'un dispositif selon l'invention, comportant un volet de distribution 4 d'un flux d'air F dans un conduit d'une installation de ventilation, chauffage et/ou climatisation de l'habitacle d'un véhicule automobile ;

- la figure 2 représente schématiquement le circuit électrique d'un module de variation de l'alimentation électrique du moteur M du dispositif, selon une forme de réalisation préférée de la présente invention ;

- la figure 3 représente schématiquement une variation de la valeur ohmique d'une résistance à coefficient de température positif, en fonction de sa température, une telle résistance étant utilisée dans le circuit électrique du module de régulation de la figure 2 ; et

- la figure 4A représente schématiquement l'allure temporelle de l'intensité i qui traverse le moteur M, lorsque le volet 4 passe d'une position d'ouverture P1 à une position de fermeture P2 ;

- la figure 4B représente schématiquement l'allure temporelle de la valeur ohmique de l'une des résistances R1 et R2 de la figure 2, lorsque le volet 4 passe d'une position d'ouverture P1 à une position de fermeture P2 ; et

- la figure 4C représente schématiquement l'allure temporelle de la tension aux bornes du moteur $U_M$, lorsque le volet 4 passe d'une position d'ouverture P1 à une position de fermeture P2.

La description détaillée ci-après et les dessins annexés contiennent pour l'essentiel des éléments de caractère certain. Ils pourront non seulement servir à mieux faire comprendre la présente invention, mais aussi contribuer à sa définition, le cas échéant.

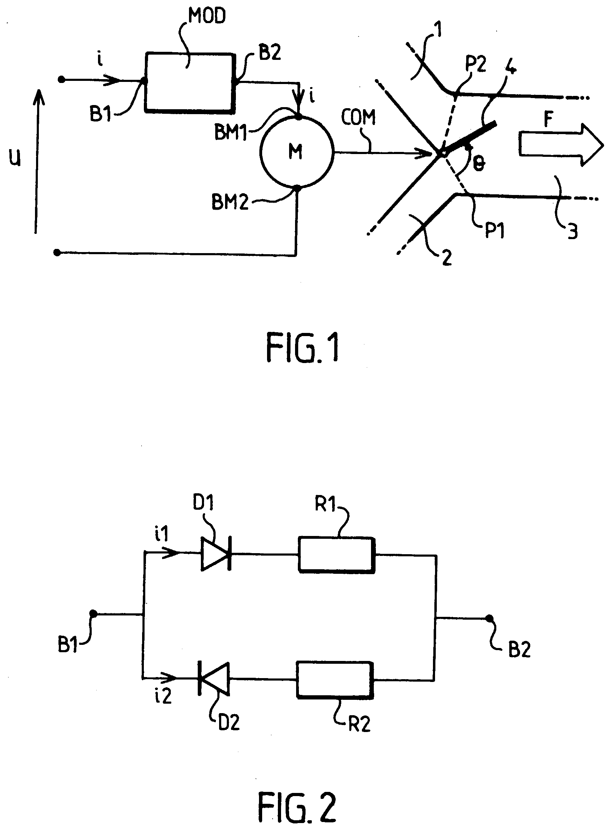

On se réfère tout d'abord à la figure 1 pour décrire un dispositif de distribution d'un flux d'air (flèche F) dans un conduit 3 d'une installation de ventilation, chauffage et/ou climatisation de l'habitacle d'un véhicule automobile, selon une forme de réalisation préférée de la présente invention.

Un tel dispositif comporte un volet 4, agencé pour se déplacer en rotation selon une course angulaire θ, entre une position d'ouverture et de fermeture de l'un des conduits 1 et 2. Le volet 4 est, dans l'exemple décrit, un volet de recirculation d'air dans l'habitacle du véhicule.

En se référant à la figure 1, un conduit d'air extérieur 1 et un conduit d'air recirculé 2 se rejoignent dans un conduit principal 3 destiné à alimenter en air ventilé l'habitacle du véhicule automobile. Lorsque le conduit 4 est dans sa position d'ouverture P1, le conduit d'air extérieur 1 communique directement avec le conduit principal 3, et de l'air extérieur est admis dans l'habitacle. En revanche, lorsque le volet 4 est dans sa position de fermeture P2, le conduit d'air extérieur 1 est fermé, tandis que le conduit d'air recirculé 2 est ouvert, ce qui permet de ventiler de l'air recirculé dans l'habitacle.

En pratique, le flux d'air extérieur provenant du conduit 1 est nettement supérieur au flux d'air recirculé provenant du conduit 2. Une position intermédiaire du volet 4, entre ses positions P1 et P2, reviendrait à n'admettre pratiquement que de l'air extérieur dans le conduit 3. Ainsi, un volet de recirculation ne reste généralement immobile que dans l'une de ses positions d'ouverture P1 ou de fermeture P2, et l'air ventilé dans l'habitacle est, soit de l'air extérieur, soit de l'air recirculé.

Un moteur M déplace le volet 4 (flèche COM) entre les deux positions P1 et P2. Par ailleurs, un module MOD de régulation en puissance d'alimentation du moteur M, est connecté en série, par sa borne B2, à la borne BM1 du moteur M. L'ensemble formé par le moteur M et le module MOD est alimenté en tension U. La tension U est alors appliquée entre les bornes B1 et BM2 respectives du module MOD et du moteur M. En pratique, cette tension d'alimentation U est délivrée par une source en tension, telle que la batterie du véhicule.

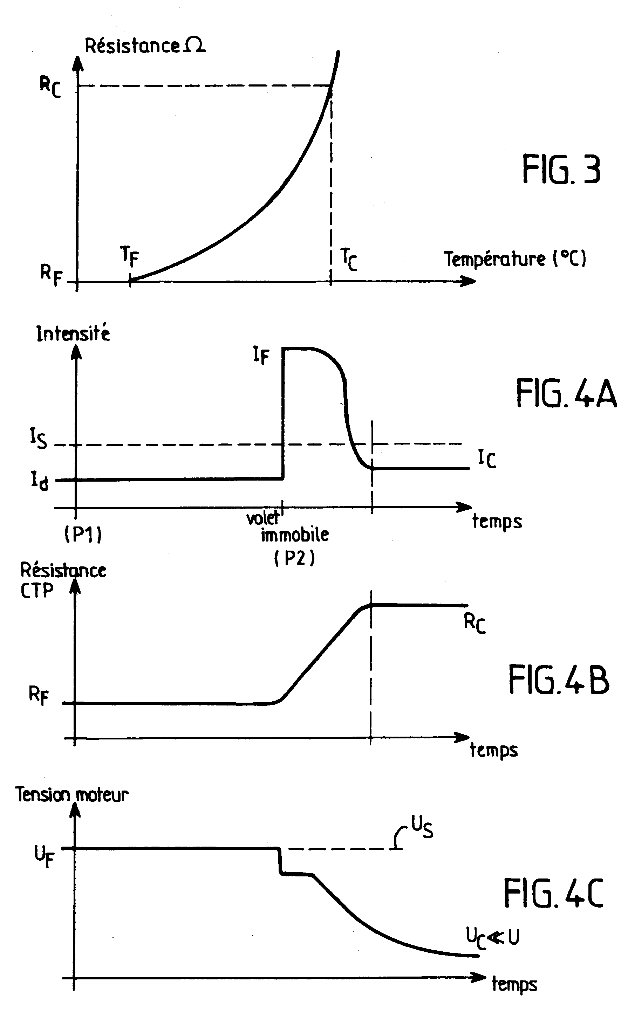

Dans une forme de réalisation préférée du module de régulation du dispositif selon l'invention, ce module MOD comporte au moins une résistance R à coefficient de température positif. En se référant à la figure 3, la valeur ohmique d'une telle résistance augmente avec sa température.

En se référant à la figure 4A, lorsque le volet se déplace, l'intensité $i_d$ qui traverse le module MOD et le moteur M, en série, est donnée typiquement par :

$$i_d = (U-E)/(r + R_F)$$

où E est la force contre-électromotrice du moteur, r correspond à la résistance interne du moteur et $R_F$ correspond à la valeur ohmique de la résistance R à froid.

Lorsque le volet 4 atteint l'une de ses positions P1 ou P2, le moteur se bloque et la vitesse de son rotor s'annule. Il s'ensuit une annulation de la force contre-électromotrice E et une augmentation brutale du courant, dont l'intensité devient :

$$i_F = U/(R_F + r)$$

Cette dernière valeur de l'intensité est, bien entendu, supérieure à l'intensité $i_d$ qui traverse habituellement le moteur lorsque le volet 4 se déplace.

La résistance R du module MOD, à coefficient de température positif, est montée en série avec le moteur M. Elle subit ainsi cette augmentation de l'intensité i. La résistance R dégage alors de la chaleur par effet Joule et sa température augmente. En se référant à la figure 3, la valeur ohmique de la résistance R augmente de façon exponentielle avec la température. Ainsi, lorsque le moteur M est bloqué, la valeur ohmique de la résistance R augmente considérablement (figure 4B), typiquement d'un facteur voisin de quelques dizaines. Sa valeur ohmique passe d'une valeur $R_F$ (à froid) à une valeur $R_C$ (à chaud), avec :

$$R_C >> R_F$$

L'intensité dans le circuit chute et devient :

$$i_C = U/(R_C + r)$$

En se référant à la figure 4A, lorsque le moteur est bloqué pendant une durée suffisante, l'intensité i se stabilise à une valeur basse, inférieure à une valeur seuil $i_s$. Cette valeur seuil $i_s$ peut être fixée à une valeur intermédiaire entre $i_F$ et $i_C$.

La tension $U_C$ aux bornes du moteur devient, quant à elle, voisine de :

$$U_C = U - R_C i_C \ (<< U)$$

En se référant à la figure 4C, la valeur de cette tension est, d'une part, nettement inférieure à la valeur de la tension d'alimentation U et, d'autre part, inférieure à la tension $U_F$ du moteur lorsque le volet se déplace, définissant, le cas échéant, une valeur seuil $U_S$ (figure 4C). On limite ainsi la puissance d'alimentation du moteur lorsque le volet est immobile.

Ainsi, selon l'un des avantages majeurs que procure la présente invention, on obtient une régulation en puissance d'alimentation du moteur M, en fonction du déplacement du volet 4.

Pour obtenir une telle régulation, une simple résistance à coefficient de température positif suffit, selon un autre avantage que procure la présente invention. Le module de régulation MOD, comportant une telle résistance, peut se présenter alors sous la forme d'un dipôle passif, sans nécessairement comprendre des composants électroniques actifs, tels que des amplificateurs opérationnels ou des transistors.

Cependant, lorsque le volet 4 est bloqué dans l'une de ses positions P1 ou P2, la résistance R est chaude, et il faut attendre son refroidissement pour délivrer une intensité et une tension suffisantes aux bornes du moteur et, de là, un couple suffisant pour déplacer le volet 4 vers son autre position P2 ou P1.

On se réfère à la figure 2 pour décrire un mode de réalisation préféré du module de régulation MOD d'un dispositif selon l'invention. Le module comprend, entre ses deux bornes B1 et B2, deux résistances R1 et R2 à coefficient de température positif, montées en parallèle. Ces résistances R1 et R2 sont connectées en série avec deux diodes inversées D1 et D2, respectivement. Un tel montage en bascule du module de régulation MOD, en combinaison avec une tension d'alimentation polarisée, permet avantageusement de commander instantanément le déplacement du volet 4, à la suite d'un blocage du moteur M.

Par exemple, lorsque la polarité de la tension U est positive (U = +|U|), l'intensité aux bornes du moteur correspond à i1, alors que i2 est nulle (diode D1 passante et diode D2 bloquée).

En revanche, lorsque la polarité de la tension d'alimentation U est négative (U = -|U|), l'intensité qui traverse le moteur M correspond à i2, tandis que l'intensité i1 est nulle (diode D2 passante et diode D1 bloquée).

Ces deux états de polarité de la tension U permettent d'obtenir, de façon quasi-instantanée, des sens de rotation opposés du volet 4.

Bien entendu, la présente invention ne se limite pas à la forme de réalisation décrite ci-avant à titre d'exemple. Elle s'étend à d'autres variantes.

Ainsi, on comprendra que le volet 4 peut être un volet de mixage pour le chauffage de l'habitacle, ou encore un volet pour la distribution d'un flux d'air alimentant l'habitacle (ventilation du pare-brise, des aérateurs centraux et des aérateurs "pieds").

Bien qu'avantageuse, l'utilisation de résistances à coefficient de température positif est décrite ci-avant à titre d'exemple d'un mode de réalisation préféré de la présente invention. En variante, il peut être prévu des composants électroniques actifs, capables de réguler l'intensité du courant qui traverse le moteur M en fonction de son état bloqué ou actif. Dans ce cas, des positions intermédiaires du volet peuvent être prévues entre sa position d'ouverture et de fermeture, de sorte que, lorsque le volet est immobile, l'intensité du courant qui le traverse chute à une valeur inférieure à une valeur seuil $i_S$, tandis que lorsque le volet se déplace, l'intensité du courant $i_d$ qui le traverse est supérieure à cette valeur seuil.

Dans une variante simplifiée du dispositif selon l'invention, il peut n'être prévu qu'une seule résistance à coefficient de température positif. Dans ce cas, entre chaque déplacement du volet 4 de l'une de ses positions à l'autre, il faut attendre que la résistance R se refroidisse. Ainsi, cette réalisation simplifiée convient à certaines commandes de volets (par exemple à la recirculation d'air dans l'habitacle), qui n'exigent pas des allers-retours rapides de tels volets.

La polarité de la tension d'alimentation, particulièrement avantageuse dans la forme de réalisation du module de régulation à deux résistances R1 et R2 en bascule, peut, notamment dans la variante simplifiée ci-avant, être supprimée.

**Revendications**

1. Dispositif de distribution d'un flux d'air (F) dans au moins un conduit (1) d'une installation de ventilation, chauffage et/ou climatisation de l'habitacle d'un véhicule automobile, du type comprenant :

   - un volet (4) propre à se déplacer entre une position de fermeture (P2) et une position d'ouverture (P1) du conduit (1),
   - un moteur électrique (M) pour déplacer le volet (4), et
   - une source d'alimentation en tension (U), caractérisé en ce qu'il comporte en outre un module (MOD) de régulation en puissance, comprenant une première borne (B2) connectée à une première borne (BM1) du moteur, tandis que la tension d'alimentation (U) est propre à être appliquée entre une seconde borne du module de régulation (B1) et la seconde borne du moteur (BM2), et en ce que le module de régulation est agencé pour ajuster, à tension d'alimentation sensiblement constante, l'intensité du courant traversant le moteur à une valeur ($i_C$) inférieure à une valeur seuil ($i_S$) lorsque le volet est immobile.

2. Dispositif selon la revendication 1, caractérisé en ce que le module de régulation (MOD) est formé d'au moins un dipôle passif (R1).

3. Dispositif selon la revendication 2, caractérisé en ce que le module de régulation comporte au moins une résistance (R1) à coefficient de température positif.

**4.** Dispositif selon l'une des revendications précédentes, caractérisé en ce que la source d'alimentation est agencée pour délivrer une tension (U) polarisée, et en ce que le module de régulation comporte une bascule (R1,D1,R2,D2) propre à fournir au moteur un courant qui est fonction de la polarité de la tension d'alimentation.

**5.** Dispositif selon la revendication 4, caractérisé en ce que le module de régulation comporte des première et seconde résistances (R1,R2) à coefficient de température positif, montées en parallèle et connectées respectivement à des première (D1) et seconde (D2) diodes, inversées et montées chacune en série avec une résistance.

**6.** Dispositif selon l'une des revendications 4 et 5, caractérisé en ce que la polarité de la tension d'alimentation est :

- d'un premier signe (+) lorsque le volet est dans sa position de fermeture (P2) et/ou en déplacement de sa position d'ouverture à sa position de fermeture, et
- d'un second signe (-), opposé au premier signe, lorsque le volet est dans sa position d'ouverture (P1) et/ou en déplacement de sa position de fermeture à sa position d'ouverture.

**7.** Dispositif selon l'une des revendications précédentes, caractérisé en ce que le module de régulation (MOD) et le moteur (M), en service, sont alimentés en tension sensiblement constante, au moins en valeur absolue ($|U|$), et en ce que le module de régulation (MOD) est agencé pour ajuster à la fois la tension et l'intensité du courant aux bornes du moteur à des valeurs inférieures à des valeurs seuils ($U_S, i_S$), lorsque le volet (4) est immobile.

**8.** Dispositif selon l'une des revendications précédentes, caractérisé en ce que le volet (4) n'est immobile que dans les positions d'ouverture (P1) et de fermeture (P2).

FIG.1

FIG. 2

**FIG. 3**

Résistance Ω

R_C

R_F

T_F    T_C    Température (°C)

**FIG. 4A**

Intensité

I_F

I_S

I_d

I_C

(P1)    volet immobile (P2)    temps

**FIG. 4B**

Résistance CTP

R_F

R_C

temps

**FIG. 4C**

Tension moteur

U_F

U_S

U_C ≪ U

temps

Office européen
des brevets

**RAPPORT DE RECHERCHE EUROPEENNE**

Numéro de la demande

EP 00 12 2589

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 150 502 A (VDO SCHINDLING) 7 août 1985 (1985-08-07) * le document en entier * | 1-8 | H02P3/02 H02P19/02 B60H1/00 |
| A | FR 2 749 626 A (SOC D MECANIQUE ET DE PLASTIQU) 12 décembre 1997 (1997-12-12) * page 8, ligne 9 - page 9, ligne 12 * * figure 6 * | 1-8 | |
| A | US 4 878 001 A (HAGIKURA HIROFUMI ET AL) 31 octobre 1989 (1989-10-31) * colonne 2, ligne 55 - colonne 3, ligne 22 * | 1 | |

**DOMAINES TECHNIQUES RECHERCHES (Int.Cl.7)**

B60H
F24F
H02P

Le présent rapport a été établi pour toutes les revendications

| Lieu de la recherche | Date d'achèvement de la recherche | Examinateur |
|---|---|---|
| LA HAYE | 18 janvier 2001 | Topolski, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 00 12 2589

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2001

| Document brevet cité au rapport de recherche | Date de publication | Membre(s) de la famille de brevet(s) | Date de publication |
|---|---|---|---|
| EP 0150502 A | 07-08-1985 | DE 3403542 A<br>DE 3479945 D | 08-08-1985<br>02-11-1989 |
| FR 2749626 A | 12-12-1997 | AUCUN | |
| US 4878001 A | 31-10-1989 | JP 1912721 C<br>JP 6037125 B<br>JP 63242708 A | 09-03-1995<br>18-05-1994<br>07-10-1988 |

EPO FORM P0460

Pour tout renseignement concernant cette annexe : voir Journal Officiel de l'Office européen des brevets, No.12/82